# EUROPEAN PATENT APPLICATION

(11) **EP 4 418 368 A1**
(43) Date of publication of application: **21.08.2024**
(21) Application number: 22889096.8
(22) Date of filing: 17.10.2022
(51) Int. Cl.: H01M 4/62

(54) **POSITIVE ELECTRODE MATERIAL POLE PIECE, PREPARATION METHOD, SECONDARY BATTERY, BATTERY MODULE, BATTERY PACK AND ELECTRIC APPARATUS**

(30) Priority: 02.11.2021 CN 202111290738
(71) Applicant: Contemporary Amperex Technology Co., Limited, Ningde, Fujian 352100 (CN)
(72) Inventor: GAO, Jingyu, Ningde, Fujian 352100 (CN)
(74) Representative: Gong, Jinping
(86) International application number: PCT/CN2022/125637
(87) International publication number: WO 2023/078071

(57) **Abstract**

This application relates to a positive electrode material plate and a preparation method thereof, a secondary battery, a battery module, a battery pack, and an electric apparatus. The positive electrode material plate includes: an electrode plate substrate and a coating layer arranged on a surface of the electrode plate substrate. The electrode plate substrate includes a compound of formula I: LiNiₓCo_{y}M_{1-x-y}O₂ (formula I), where 0.6 ≤ x < 1, 0 ≤ y ≤ 0.2, and M is at least one of Mn, Al, Ti, Zr, Mg, W, and Mo; and the coating layer is a three-dimensional network lithium phosphate layer with a thickness of 12 nm to 13 nm, and a percentage of lithium phosphate is 20% to 30%. In this application, a three-dimensional network lithium phosphate protective layer is formed on a surface of the positive electrode material plate, which effectively protects the active material from side reactions with an electrolyte. In addition, the three-dimensional network structure can ensure rapid transport of lithium ions on the surface of the electrode plate, thus improving the electrochemical performance of the lithium-ion battery.

## Description

### CROSS-REFERENCE TO RELATED APPLICATIONS

This application claims priority to Chinese Patent Application No. 202111290738.2, filed on November 2, 2021 and entitled "POSITIVE ELECTRODE MATERIAL PLATE AND PREPARATION METHOD THEREOF, SECONDARY BATTERY, BATTERY MODULE, BATTERY PACK, AND ELECTRIC APPARATUS", which is incorporated herein by reference in its entirety.

### TECHNICAL FIELD

This application pertains to the field of lithium-ion batteries, and relates to a positive electrode material plate, and specifically, to a high-nickel ternary positive electrode material plate and a preparation method thereof, a secondary battery containing the positive electrode material plate, and a battery module, a battery pack, and an electric apparatus containing the secondary battery.

### BACKGROUND

With the development of new energy vehicles and energy storage businesses, the market demand for the electrochemical performance of lithium-ion batteries is increasingly high. Lithium-ion batteries mainly use high-nickel ternary positive electrode material plates. However, there is too much residual lithium on the surface of the high-nickel ternary positive electrode material plate, which leads to an increase in side reactions and impedance of the electrode plate. In addition, during charging and discharging, the water and hydrofluoric acid in the electrolyte will decompose the solid electrolyte interphase (SEI) film on the surface of the electrode plate, resulting in the loss of active material and the decline of the cycling performance of the battery cell. Therefore, it is necessary to perform a treatment on the positive electrode material plate to improve the electrochemical performance of the battery.

At present, the positive electrode material plate of the battery is treated with inorganic phosphoric acid to improve the electrochemical performance of the battery. However, inorganic phosphoric acid is weak in activity and cannot form a continuous structure, which cannot ensure the continuity and stability of the protective layer of the electrode plate, and in addition, the treatment process needs high-temperature heating.

Therefore, there is an urgent need in the field for an improved method that has overcome the foregoing existing technical defects and can be used to perform a treatment on the positive electrode plate to improve the electrochemical performance of the battery.

### SUMMARY

To solve the problems existing in the prior art, this application improves the electrochemical performance of a lithium-ion battery by using a phytic acid solution with a specified concentration to perform a treatment on a positive electrode material plate.

According to a first aspect of this application, a positive electrode material plate is provided, where the positive electrode material plate includes:
an electrode plate substrate and a coating layer arranged on a surface of the electrode plate substrate,
where the coating layer is a three-dimensional network lithium phosphate layer with a thickness of 10 nm to 20 nm, and a percentage of lithium phosphate is 20% to 30%.

Optionally, the electrode plate substrate includes a compound of formula I:

LiNiₓCo_{y}M_{1-x-y}O₂ formula I,

where 0.6 ≤ x < 1, 0 ≤ y ≤ 0.2, and M is at least one of Mn, Al, Ti, Zr, Mg, W, and Mo.

Optionally, the coating layer is a three-dimensional network lithium phosphate layer with a thickness of 12 nm to 13 nm.

Optionally, the coating layer is a three-dimensional network lithium phosphate layer with a thickness of 12.4 nm to 12.8 nm. Optionally, the percentage of lithium phosphate is 22% to 26%.

In this application, a three-dimensional network lithium phosphate protective layer is formed on a surface of the positive electrode material plate, which effectively protects an active material from side reactions with an electrolyte. In addition, the three-dimensional network structure can ensure rapid transport of lithium ions on the surface of the electrode plate, thus improving the electrochemical performance of a lithium-ion battery.

According to a second aspect of this application, a method for preparing a positive electrode material plate is provided, where the method includes:
providing a mixture of a nickel source, a cobalt source, and a metal M source, where M is at least one of Mn, Al, Ti, Zr, Mg, W, and Mo, and mixing the mixture with urea and deionized water, followed by stirring and performing a hydrothermal reaction to obtain a precursor;
reacting the precursor with a lithium source, and performing sintering to obtain a positive electrode material, where the positive electrode material has formula I:

   LiNiₓCo_{y}M_{1-x-y}O₂ formula I,
where 0.6 ≤ x < 1, 0 ≤ y ≤ 0.2, and M is at least one of Mn, Al, Ti, Zr, Mg, W, and Mo; and
applying the positive electrode material on a positive electrode current collector, and performing a treatment to obtain the positive electrode material plate. Optionally, the treatment includes the following step:
adding a phytic acid solution dropwise onto a surface of the positive electrode material plate to form a coating layer on the surface of the positive electrode material plate, where the coating layer is a three-dimensional network lithium phosphate layer with a thickness of 12 nm to 13 nm, and a percentage of lithium phosphate is 20% to 30%;
where a ratio of an amount of the phytic acid solution used to an area of the positive electrode material plate is 0.2 mL/cm² to 0.45 mL/cm².

In this application, the phytic acid solution is used for treatment. The phytic acid can react with residual lithium on the surface of the electrode plate to generate a lithium phosphate protective layer, which inhibits the dissolution of an active material and a SEI layer. In addition, high-activity phosphorus hydroxyl groups and ester groups in the phytic acid can cross-link with lithium phosphate to form a spatial network protective film with a high cross-linking density, which is conducive to the transport of lithium ions on the surface of the electrode plate.

In an embodiment of this application, the ratio of the amount of the phytic acid solution used to the area of the positive electrode material plate is 0.2 mL/cm² to 0.3 mL/cm². Optionally, the ratio of the amount of the phytic acid solution used to the area of the positive electrode material plate is 0.25 mL/cm².

In this application, a proper amount of phytic acid solution used can generate a cross-linked network lithium phosphate protective layer with an optimal thickness, effectively protecting an active substance and the SEI layer on the surface of the electrode plate and ensuring rapid transport of lithium ions on the surface of the electrode plate.

In an embodiment of this application, a surface treatment time of the positive electrode material plate is 20 minutes to 45 minutes. Optionally, the surface treatment time of the positive electrode material plate is 20 minutes to 30 minutes. Optionally, the surface treatment time of the positive electrode material plate is 25 minutes.

In this application, the treatment being performed for a proper time using the phytic acid solution can generate a cross-linked network lithium phosphate protective layer with an optimal thickness, effectively protecting the active substance and the SEI layer on the surface of the electrode plate and ensuring rapid transport of lithium ions on the surface of the electrode plate.

According to a third aspect of this application, a secondary battery is provided, including the foregoing positive electrode material plate.

According to a fourth aspect of this application, a battery module is provided, including the foregoing secondary battery.

According to a fifth aspect of this application, a battery pack is provided, including the foregoing secondary battery or battery module.

According to a sixth aspect of this application, an electric apparatus is provided, including the foregoing secondary battery, the foregoing battery module, or the foregoing battery pack, where the secondary battery, the battery module, or the battery pack is used as a power source of the electric apparatus or an energy storage unit of the electric apparatus.

Compared with the prior art, a phytic acid solution with a specified concentration is used for performing a treatment on the positive electrode material plate, a three-dimensional network lithium phosphate protective layer is formed on a surface of the positive electrode material plate, which effectively protects the active material from side reactions with the electrolyte. In addition, the three-dimensional network structure can ensure rapid transport of lithium ions on the surface of the electrode plate, thus improving the electrochemical performance of the lithium-ion battery.

Through reading of the detailed description below and reference to the associated accompanying drawings, these and other features and advantages will become apparent. It should be understood that the foregoing brief description and the detailed description below are merely illustrative and do not impose limitations on the aspects claimed.

### BRIEF DESCRIPTION OF DRAWINGS

FIG. 1 is a scanning electron microscope (SEM) diagram (A), an element phosphorus scanning diagram (B), and high-resolution spectrograms (C and D) of a negative electrode plate in Example 1 of this application.
FIG. 2 is a diagram of a phosphorus 2p X-ray photoelectron spectroscopy (P 2p XPS) of the negative electrode plate in Example 1 of this application.
FIG. 3 is a schematic diagram of a secondary battery according to an embodiment of this application.
FIG. 4 is an exploded view of the secondary battery in FIG. 3.
FIG. 5 is a schematic diagram of a battery module according to an embodiment of this application.
FIG. 6 is a schematic diagram of a battery pack according to an embodiment of this application.
FIG. 7 is an exploded view of the battery pack in FIG. 6.
FIG. 8 is a schematic diagram of an apparatus using the secondary battery in this application as a power source according to an embodiment of this application.

### Description of reference signs:

1. battery pack;
2. upper box body;
3. lower box body;
4. battery module;
5. secondary battery;
51. housing;
52. electrode assembly; and
53. cover plate.

### DESCRIPTION OF EMBODIMENTS

The following describes in detail this application with reference to accompanying drawings, and the features of this application will be further revealed in the following detailed description.

"Ranges" disclosed herein are defined in the form of lower and upper limits. A given range is defined one lower limit and one upper limit selected, where the selected lower and upper limits define boundaries of that particular range. Ranges defined in this method may or may not include end values, and any combinations may be used, meaning any lower limit may be combined with any upper limit to form a range. For example, if ranges of 60-120 and 80-110 are provided for a specific parameter, it is understood that ranges of 60-110 and 80-120 can also be envisioned. In addition, if minimum values of a range are given as 1 and 2, and maximum values of the range are given as 3, 4, and 5, the following ranges can all be envisioned: 1-3, 1-4, 1-5, 2-3, 2-4, and 2-5. In this application, unless otherwise stated, a value range of "a-b" is a short representation of any combination of real numbers between a and b, where both a and b are real numbers. For example, a value range of "0-5" means that all real numbers in the range of "0-5" are listed herein, and "0-5" is just a short representation of a combination of these values. In addition, a parameter expressed as an integer greater than or equal to 2 is equivalent to disclosure that the parameter is, for example, an integer among 2, 3, 4, 5, 6, 7, 8, 9, 10, 11, 12, and so on.

In this application, unless otherwise specified, all the embodiments and preferred embodiments mentioned herein can be combined with each other to form new technical solutions. In this application, unless otherwise specified, all the technical features and optional features mentioned herein can be combined with each other to form new technical solutions.

In this application, unless otherwise specified, "include" and "contain" mentioned in this application are inclusive or may be exclusive. For example, the terms "include" and "contain" can mean that other unlisted components may also be included or contained, or only listed components are included or contained.

In the descriptions of this specification, unless otherwise stated, the term "or" is inclusive. For example, the phrase "A or B" means "A, B, or both A and B". More specifically, any one of the following conditions satisfies the condition "A or B": A is true (or present) and B is false (or not present); A is false (or not present) and B is true (or present); or both A and B are true (or present).

There is too much residual lithium on the surface of an existing high-nickel ternary positive electrode material plate, which leads to an increase in side reactions and impedance of the electrode plate. In addition, during charging and discharging, water and hydrofluoric acid in an electrolyte will decompose a solid electrolyte interphase film on the surface of the electrode plate, resulting in the loss of an active material and the decline of the cycling performance of a battery cell. At present, the positive electrode material plate of the battery is treated with inorganic phosphoric acid to improve the electrochemical performance of the battery. However, inorganic phosphoric acid is weak in activity and cannot form a continuous structure, which cannot ensure the continuity and stability of the protective layer of the electrode plate, and in addition, the treatment process needs high-temperature heating.

In order to solve the foregoing defects of treating a high-nickel ternary positive electrode material plate with inorganic phosphoric acid in the prior art, a phytic acid solution is selected in this application to treat a high-nickel ternary material electrode plate. The phytic acid can react with residual lithium on the surface of the electrode plate to generate a lithium phosphate protective layer, which inhibits the dissolution of an active material and a SEI layer. In addition, high-activity phosphorus hydroxyl groups and ester groups in the phytic acid can cross-link with lithium phosphate to form a spatial network protective film with a high cross-linking density, which is conducive to the transport of lithium ions on the surface of the electrode plate.

In this application, a surface-modified high-nickel ternary material electrode plate is prepared in this application, where a three-dimensional network lithium phosphate protective layer is formed on a surface of the high-nickel ternary material electrode plate, which effectively protects an active material from side reactions with an electrolyte. In addition, the three-dimensional network structure can ensure rapid transport of lithium ions on the surface of the electrode plate, thus improving the electrochemical performance of a lithium-ion battery.

Phytic acid, also known as inositol hexaphosphate or cyclohexanehexol hexaphosphoric acid, with a molecular formula of C₆H₁₈O₂₄P₆, is an organic phosphorus compound extracted from plant seeds. In this application, the phytic acid solution used is a solution prepared by dissolving 25 mg of phytic acid powder in 100 mL of dimethyl sulfoxide.

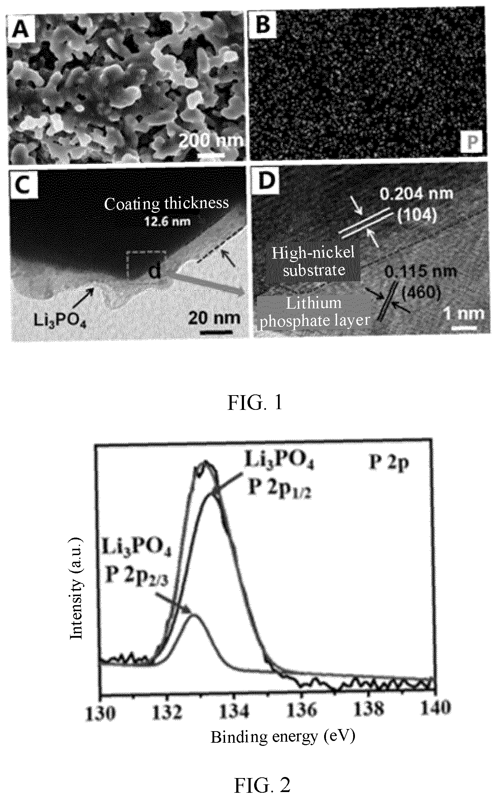

In this application, thickness of the three-dimensional network lithium phosphate layer is 10 nm to 20 nm, where a percentage of lithium phosphate is 20% to 30%, which is calculated based on a peak area in a P 2p XPS spectrum. (A) and (B) in FIG. 1 show that a three-dimensional network cross-linked layer is formed on a surface of a high-nickel ternary positive electrode plate in this application after phytic acid treatment, which proves the effective doping of element phosphorus in the surface cross-linked layer. (C) and (D) in FIG. 1 show that a cross-linked layer with a thickness of approximately 12.6 nm can be seen on the surface of the electrode plate in this application after treatment. Additionally, high-resolution spectrum analysis results show that an interplanar spacing of the surface corresponds to (460) crystal plane of lithium phosphate, proving that phytic acid treatment results in formation of a lithium phosphate three-dimensional cross-linked layer with a thickness of approximately 12.6 nm on the surface of the high-nickel ternary electrode plate. FIG. 2 shows that the peak in the P 2p XPS spectrum in this application mainly corresponds to lithium phosphate, and through the comparison of a change in the peak area, percentages of lithium phosphate layers in different examples and comparative examples can be obtained.

### Positive electrode material plate

In this application, a positive electrode material includes a high-nickel ternary material. A positive electrode material plate includes an electrode plate substrate and a coating layer arranged on a surface of the electrode plate substrate. The electrode plate substrate includes a compound of formula I:

LiNiₓCo_{y}M_{1-x-y}O₂ formula I,

where 0.6 ≤ x < 1, 0 ≤ y ≤ 0.2, and M is at least one of Mn, Al, Ti, Zr, Mg, W, and Mo. The coating layer is a three-dimensional network lithium phosphate layer.

In this application, thickness of the three-dimensional network lithium phosphate layer is 10 nm to 20 nm. Optionally, the thickness of the three-dimensional network lithium phosphate layer is 12 nm to 13 nm. Optionally, the thickness of the three-dimensional network lithium phosphate layer is 12.4 nm to 12.8 nm. Optionally, the thickness of the three-dimensional network lithium phosphate layer is 12.6 nm.

In this application, a percentage of lithium phosphate in the three-dimensional network lithium phosphate layer is 20% to 30%, which is calculated based on a peak area in a P 2p XPS spectrum. Optionally, the percentage of lithium phosphate in the three-dimensional network lithium phosphate layer is 22% to 26%, which is calculated based on the peak area in the P 2p XPS spectrum. Optionally, the percentage of lithium phosphate in the three-dimensional network lithium phosphate layer is 24.5%, which is calculated based on the peak area in the P 2p XPS spectrum.

In this application, the three-dimensional network lithium phosphate protective layer effectively protects an active material from side reactions with an electrolyte. In addition, the three-dimensional network structure can ensure rapid transport of lithium ions on the surface of the electrode plate, thus improving the electrochemical performance of a lithium-ion battery.

The positive electrode material of this application is applicable to a secondary battery, where the secondary battery can be used as an energy storage unit of an electric apparatus. The electric apparatus includes but is not limited to a mobile digital apparatus (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, an energy storage system, and the like.

### Method for preparing positive electrode material plate

In this application, a method for preparing a positive electrode material plate includes:
providing a mixture of a nickel source, a cobalt source, and a metal M source, where M is at least one of Mn, Al, Ti, Zr, Mg, W, and Mo, and mixing the mixture with urea and deionized water, followed by stirring and performing a hydrothermal reaction to obtain a precursor;
reacting the precursor with a lithium source, and performing sintering to obtain a positive electrode material, where the positive electrode material has formula I:

   LiNiₓCo_{y}M_{1-x-y}O₂ formula I,
where 0.6 ≤ x < 1, 0 ≤ y ≤ 0.2, and M is at least one of Mn, Al, Ti, Zr, Mg, W, and Mo; and
applying the positive electrode material on a positive electrode current collector, and performing a treatment to obtain the positive electrode material plate.

In an embodiment of this application, the precursor has a general formula of NiₓCo_{y}M_{1-x-y}CO₃, where 0.6 ≤ x < 1, 0 ≤ y ≤ 0.2, and M is at least one of Mn, Al, Ti, Zr, Mg, W, and Mo.

In this application, the treatment includes the following step: adding a phytic acid solution dropwise onto a surface of the positive electrode material plate to form a coating layer on the surface of the positive electrode material plate.

In this application, the phytic acid can react with residual lithium on the surface of the electrode plate to generate a lithium phosphate protective layer, which inhibits the dissolution of an active material and a SEI layer; in addition, high-activity phosphorus hydroxyl groups and ester groups in the phytic acid can cross-link with lithium phosphate to form a spatial network protective film with a high cross-linking density, which is conducive to the transport of lithium ions on the surface of the electrode plate.

In this application, a ratio of an amount of the phytic acid solution used to an area of the positive electrode material plate is 0.2 mL/cm² to 0.45 mL/cm². Optionally, the ratio of the amount of the phytic acid solution used to the area of the positive electrode material plate is 0.2 mL/cm² to 0.3 mL/cm². Optionally, the ratio of the amount of the phytic acid solution used to the area of the positive electrode material plate is 0.25 mL/cm².

In this application, when the amount of the phytic acid solution used is excessive, the lithium phosphate layer generated on the surface of the electrode plate is too thick, which hinders the transport of lithium ions on the surface of the electrode plate; or when the amount of the phytic acid solution used is too small, the lithium phosphate layer formed on the surface of the electrode plate is too thin, resulting in a decrease in the effect of the treatment using the phytic acid solution. Therefore, a proper amount of phytic acid solution used can generate a cross-linked network lithium phosphate protective layer with an optimal thickness, effectively protecting the active substance and the SEI layer on the surface of the electrode plate and ensuring rapid transport of lithium ions on the surface of the electrode plate.

In this application, a treatment time is 20 minutes to 45 minutes. Optionally, the treatment time is 20 minutes to 30 minutes. Optionally, the treatment time is 25 minutes.

In this application, when the time of treatment using the phytic acid is too long, the lithium phosphate layer generated on the surface is too thick, which hinders the transport of lithium ions on the surface of the electrode plate; or when the treatment time is too short, the lithium phosphate layer formed on the surface is too thin, resulting in a decrease in the effect of the treatment using the phytic acid solution. Therefore, the treatment being performed for a proper time using the phytic acid solution can generate a cross-linked network lithium phosphate protective layer with an optimal thickness, effectively protecting the active substance and the SEI layer on the surface of the electrode plate and ensuring rapid transport of lithium ions on the surface of the electrode plate.

### Secondary battery

An embodiment of this application provides a secondary battery, where the secondary battery may be a lithium-ion secondary battery, a potassium-ion secondary battery, a sodium-ion secondary battery, or a lithium-sulfur battery, and in particular is preferably a lithium-ion secondary battery. The secondary battery in this application includes a positive electrode (electrode plate), a negative electrode (electrode plate), a separator, and an electrolyte/electrolyte solution. In a charge and discharge process of the battery, active ions are intercalated and deintercalated between the positive electrode plate and the negative electrode plate. The electrolyte conducts ions between the positive electrode plate and the negative electrode plate.

### [Positive electrode plate]

In the secondary battery in this application, the positive electrode plate includes a positive electrode current collector and a positive electrode film layer (or referred to as a positive electrode active substance layer) that is disposed on at least one surface of the positive electrode current collector and includes a positive electrode active material. For example, the positive electrode current collector has two surfaces back to back in its thickness direction, and the positive electrode film layer is provided on either or both of the two back-to-back surfaces of the positive electrode current collector. In the secondary battery in this application, the positive electrode current collector may be a metal foil or a composite current collector; for example, the metal foil may be an aluminum foil, and the composite current collector may include a polymer matrix and a metal layer formed on at least one surface of the polymer matrix. The composite current collector may be formed by forming a metal material (such as aluminum, aluminum alloy, nickel, nickel alloy, titanium, titanium alloy, silver, or silver alloy) on the polymer matrix (for example, a matrix of polypropylene PP, polyethylene glycol terephthalate PET, polybutylene terephthalate PBT, polystyrene PS, polyethylene PE, or copolymers thereof).

In this application, compacted densities of a first positive electrode active substance layer and a second positive electrode active substance layer of the secondary battery are controlled, which can shorten the ion transport path, so as to prolong the cycle life of the secondary battery. In addition, a situation of an increased specific surface area (BET) caused by particle fragmentation of an active substance due to an excessively high compacted density will not occur, where this situation will lead to side reactions and thus shorten the cycle life of the secondary battery to a certain extent. Typically, compacted densities of the first positive electrode active substance layer and the second positive electrode active substance layer may range from 2.0 g/cm³ to 3.6 g/cm³. In an embodiment of this application, the compacted densities of the first positive electrode active substance layer and the second positive electrode active substance layer may be within a numerical range with any two of the following values as end values: 2.0, 2.1, 2.2, 2.3, 2.4, 2.5, 2.6, 2.7, 2.8, 2.9, 3.0, 3.1, 3.2, 3.3, 3.4, and 3.5. In an optional embodiment of this application, the compacted densities of the first positive electrode active substance layer and the second positive electrode active substance layer may range from 2.3 g/cm³ to 3.5 g/cm³.

In the secondary battery of this application, the positive electrode active material (substance) may be a well-known positive electrode active material used for secondary batteries in the art. For example, the positive electrode active material may include one or more of the following materials: olivine-structured lithium-containing phosphate, lithium transition metal oxide, and respective modified compounds thereof. However, this application is not limited to such materials, and may alternatively use other conventional materials that can be used as positive electrode active materials for secondary batteries. One type of these positive electrode active materials may be used alone, or two or more of them may be used in combination. For example, the lithium transition metal oxide may include but is not limited to one or more of lithium cobalt oxide (LiCoO₂), lithium nickel oxide (LiNiO₂), lithium manganese oxide (for example, LiMnO₂ and LiMn₂O₄), lithium nickel cobalt oxide, lithium manganese cobalt oxide, lithium nickel manganese oxide, lithium manganese cobalt oxide (for example, LiNi_{1/3}Co_{1/3}Mn_{1/3}O₂ (NCM333), LiNi_{0.5}Co_{0.2}Mn_{0.3}O₂ (NCM523), LiNi_{0.5}Co_{0.25}Mn_{0.25}O₂ (NCM211), LiNi_{0.6}Co_{0.2}Mn_{0.2}O₂ (NCM622), and LiNi_{0.8}Co_{0.1}Mn_{0.1}O₂ (NCM811)), lithium nickel aluminum cobalt oxide (for example, LiNi_{0.85}Co_{0.15}Al_{0.05}O₂), and modified compounds thereof. For example, the olivine-structured lithium-containing phosphate may include but is not limited to one or more of lithium iron phosphate (LiFePO₄ (LFP)), composite material of lithium iron phosphate and carbon, lithium manganese phosphate (LiMnPO₄), composite material of lithium manganese phosphate and carbon, lithium manganese iron phosphate, and composite material of lithium manganese iron phosphate and carbon. In an embodiment of this application, a second positive electrode active substance and a third positive electrode active substance are the same or different, and are selected from lithium iron phosphate (LFP), lithium manganate (LMO), lithium nickel cobalt manganate (NCM), lithium cobalt oxide (LCO), lithium nickel cobalt aluminate (NCA), and oxides containing active sodium ions, polyanion materials, or Prussian blue materials.

In some embodiments, the positive electrode film layer further optionally includes a binder. Non-limiting examples of the binder used for the positive electrode film layer may include one or more of the following: polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylic resin. In an embodiment of this application, the first positive electrode active substance layer and/or the second positive electrode active substance layer independently contain a binder selected from polyvinylidene fluoride, polyacrylic acid, polytetrafluoroethylene, polyimide, and combinations thereof.

In some embodiments, the positive electrode film layer may further optionally contain a conductive agent. For example, the conductive agent for the positive electrode film layer may include one or more of superconducting carbon, acetylene black, carbon black, Ketjen black, carbon dots, carbon nanotube, graphene, and carbon nanofiber. In an embodiment of this application, the first positive electrode active substance layer and/or the second positive electrode active substance layer independently contain a conductive agent selected from graphite, carbon black, acetylene black, graphene, carbon nanotubes, and combinations thereof.

In an embodiment of this application, the positive electrode may be prepared in the following manner: the foregoing constituents used for preparing the positive electrode, for example, the positive electrode active material, conductive agent, binder, and any other constituents, are dispersed in a solvent (for example, N-methylpyrrolidone) to form a uniform positive electrode slurry; and the positive electrode slurry is applied on the positive electrode current collector, followed by processes such as drying and cold pressing to obtain the positive electrode plate.

### [Negative electrode plate]

The secondary battery of this application includes a negative electrode plate, where the negative electrode plate includes a negative electrode current collector and a negative electrode film layer (or referred to as negative electrode active substance layer) provided on at least one surface of the negative electrode current collector. In an embodiment of this application, a first negative electrode active substance and a second negative electrode active substance are the same or different, and each independently contain natural graphite, artificial graphite, graphene, carbon nanotubes, soft carbon, hard carbon, and a combination of two or more of them.

In an embodiment of this application, compacted densities of a first negative electrode active substance layer and a second negative electrode active substance layer may range from 0.5 g/cm³ to 2.0 g/cm³. In an embodiment of this application, the compacted densities of the first negative electrode active substance layer and the second negative electrode active substance layer may be within a numerical range with any two of the following values as end values: 0.5, 0.6, 0.7, 0.8, 0.9, 1.0, 1.1, 1.2, 1.3, 1.4, 1.5, 1.6, 1.7, 1.8, 1.9, and 2.0. In an optional embodiment of this application, the compacted densities of the first positive electrode active substance layer and the second positive electrode active substance layer may range from 1.0 g/cm³ to 1.8 g/cm³.

In an embodiment of this application, in addition to the foregoing negative electrode active material of this application, the negative electrode film layer may further include a specified amount of other commonly used negative electrode active materials, for example, one or more of natural graphite, other artificial graphite, soft carbon, hard carbon, silicon-based materials, tin-based materials, and lithium titanate. The silicon-based material may be selected from one or more of elemental silicon, silicon oxide, and a silicon-carbon composite. The tin-based material may be selected from one or more of elemental tin, tin-oxygen compounds, and a tin alloy.

In the secondary battery of this application, the negative electrode film plate usually includes the negative electrode active material, an optional binder, an optional conductive agent, and other optional additives, and is usually formed by a negative electrode slurry applied as a coating and dried. The negative electrode slurry is usually obtained by dispersing the negative electrode active material and the optional conductive agent, binder, and others in a solvent and stirring them to uniformity. The solvent may be N-methylpyrrolidone (NMP) or deionized water.

In an example, the conductive agent may include one or more of superconducting carbon, carbon black (for example, acetylene black or Ketjen black), carbon dots, carbon nanotubes, graphene, and carbon nanofiber.

In an example, the binder may include one or more of styrene-butadiene rubber (SBR), water soluble unsaturated resin SR-1B, polyacrylic acid (PAA), polyacrylic acid sodium (PAAS), polyacrylamide (PAM), polyvinyl alcohol (PVA), sodium alginate (SA), and carboxymethyl chitosan (CMCS). In an example, the binder may include one or one of styrene-butadiene rubber (SBR), polyvinyl alcohol (PVA), sodium alginate (SA), polymethacrylic acid (PMAA), and carboxymethyl chitosan (CMCS). The other optional additives are, for example, a thickener (for example, sodium carboxymethyl cellulose CMC-Na) and a PTC thermistor material.

In addition, in the secondary battery of this application, the negative electrode plate does not exclude other additional functional layers other than the negative electrode film layer. For example, in some embodiments, the negative electrode plate of this application may further include a conductive primer layer (for example, consisting of a conductive agent and a binder) sandwiched between the negative electrode current collector and a first negative electrode film layer and disposed on the surface of the negative electrode current collector. In some other embodiments, the negative electrode plate of this application may further include a protective layer covering a surface of a second negative electrode film layer.

In the secondary battery of this application, the negative electrode current collector may be metal foil or a composite current collector. For example, the metal foil may be copper foil, silver foil, iron foil, or foil made of alloys of the foregoing metals. The composite current collector may include a polymer matrix and a metal layer formed on at least one surface of the polymer matrix, and may be formed by forming a metal material (such as copper, copper alloy, nickel, nickel alloy, titanium, titanium alloy, silver, or silver alloy) on the polymer matrix (for example, a matrix of polypropylene PP, polyethylene glycol terephthalate PET, polybutylene terephthalate PBT, polystyrene PS, polyethylene PE, or copolymers thereof).

### [Electrolyte]

The electrolyte conducts ions between the positive electrode plate and the negative electrode plate. The electrolyte may be at least one selected from a solid electrolyte and a liquid electrolyte (that is, an electrolyte solution). In some embodiments, the electrolyte is a liquid electrolyte. The liquid electrolyte includes an electrolytic salt and a solvent. In some embodiments, the electrolytic salt may be selected from one or more of LiPF₆ (lithium hexafluorophosphate), LiBF₄ (lithium tetrafluoroborate), LiClO₄ (lithium perchlorate), LiAsF₆ (lithium hexafluoroborate), LiFSI (lithium bis(fluorosulfonyl)imide), LiTFSI (lithium bis-trifluoromethanesulfonimide), LiTFS (lithium trifluoromethanesulfonat), LiDFOB (lithium difluorooxalatoborate), LiBOB (lithium bisoxalatoborate), LiPO₂F₂ (lithium difluorophosphate), LiDFOP (lithium difluorophosphate), and LiTFOP (lithium tetrafluoro oxalate phosphate). In an embodiment of this application, the solvent may be selected from one or more of the following: ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methylmethyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), gamma butyrolactone (GBL), sulfolane (SF), methyl sulfonyl methane (MSM), ethyl methyl sulfone (EMS), and ethylsulfonyl ethane (ESE). In an embodiment of this application, based on a total weight of the liquid electrolyte, a proportion of the solvent is 60wt%-99wt%, for example, 65wt%-95wt%, 70wt%-90wt%, 75wt%-89wt%, or 80wt%-85wt%. In an embodiment of this application, based on a total weight of the liquid electrolyte, a proportion of the electrolytic salt is 1wt%-40wt%, for example, Swt%-35wt%, 10wt%-30wt%, 11wt%-25wt%, or 15wt%-20wt%.

In an embodiment of this application, the liquid electrolyte may further optionally include an additive. For example, the additive may include one or more of the following: a negative electrode film forming additive, a positive electrode film forming additive, or may include an additive capable of improving some performance of batteries, for example, an additive for improving over-charge performance of batteries, an additive for improving high-temperature performance of batteries, or an additive for improving low-temperature performance of batteries.

### [Separator]

In an embodiment of this application, the secondary battery further includes a separator, where the separator separates an anode side from a cathode side of the secondary battery, and selectively allows transmission or blocks substances of different types, sizes, and charges in the system. For example, the separator is an electronic insulator, which physically separates the positive electrode active substance from the negative electrode active substance of the secondary battery, thereby preventing internal short circuit and forming an electric field in a given direction, and which allows ions in the battery to move between the positive and negative electrodes through the separator. In an embodiment of this application, a material used for preparing the separator may include one or more of glass fiber, non-woven fabric, polyethylene, polypropylene, and polyvinylidene fluoride. The separator may be a single-layer film or a multi-layer composite film. When the separator is a multi-layer composite film, all layers may be made of the same or different materials. In an embodiment of this application, the separator is selected from a polyolefin separator, a polyester separator, a polyimide separator, a polyamide separator, and a cellulose separator.

In an embodiment of this application, the positive electrode plate, the negative electrode plate, and the separator may be made into an electrode assembly/jelly roll through winding or lamination. In an embodiment of this application, the secondary battery may include an outer package. The outer package may be used for packaging the electrode assembly and the electrolyte. In some embodiments, the outer package of the secondary battery may be a hard shell, for example, a hard plastic shell, an aluminum shell, or a steel shell. In some other embodiments, the outer package of the secondary battery may alternatively be a soft pack, for example, a soft pouch. A material of the soft pack may be plastic, for example, one or more of polypropylene (PP), polybutylene terephthalate (PBT), polybutylene succinate (PBS), and the like.

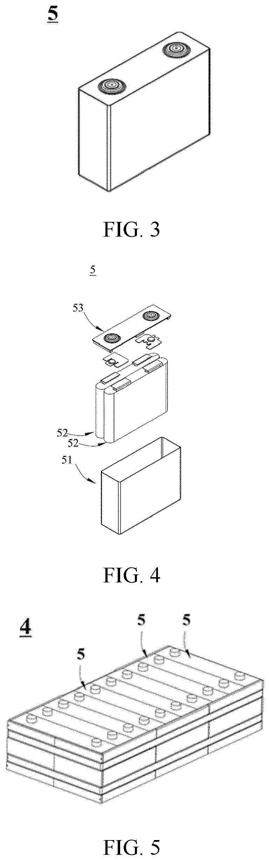

The secondary battery in this application may be cylindrical, rectangular, or of any other shapes. FIG. 3 shows a rectangular secondary battery 5 as an example. FIG. 4 is an exploded view of the secondary battery 5 in FIG. 3. The outer package may include a housing 51 and a cover plate 53. The housing 51 may include a base plate and side plates connected with the base plate, and the base plate and the side plates enclose an accommodating cavity. The housing 51 has an opening in communication with the accommodating cavity, and the cover plate 53 can cover the opening to close the accommodating cavity. A positive electrode plate, a negative electrode plate, and a separator may be made into an electrode assembly 52 through winding or lamination. The electrode assembly is packaged in the accommodating cavity, and the electrolyte infiltrates into the electrode assembly 52. The secondary battery 5 may include one or more electrode assemblies 52.

In an embodiment of this application, a plurality of secondary batteries may be assembled into a battery module, the battery module includes two or more secondary batteries, and the specific number depends on application of the battery module land parameters of a single battery module.

FIG. 5 shows a battery module 4 as an example. Refer to FIG. 5. In the battery module 4, a plurality of secondary batteries 5 may be sequentially arranged in a length direction of the battery module 4. Certainly, the batteries may alternatively be arranged in any other manners. Further, the plurality of secondary batteries 5 may be fastened through fasteners.

Optionally, the battery module 4 may further include an enclosure with an accommodating space, and the plurality of secondary batteries 5 are accommodated in the accommodating space.

In an embodiment of this application, two or more battery modules as described above may be further assembled into a battery pack, and the number of battery modules included in the battery pack depends on application of the battery pack and a parameter of an individual battery module. The battery pack may include a battery box and a plurality of battery modules arranged in the battery box. The battery box includes an upper box body and a lower box body. The upper box body can be engaged with and well fit with the lower box body to form an enclosed space for accommodating the battery modules. Two or more battery modules may be arranged in the battery box as required.

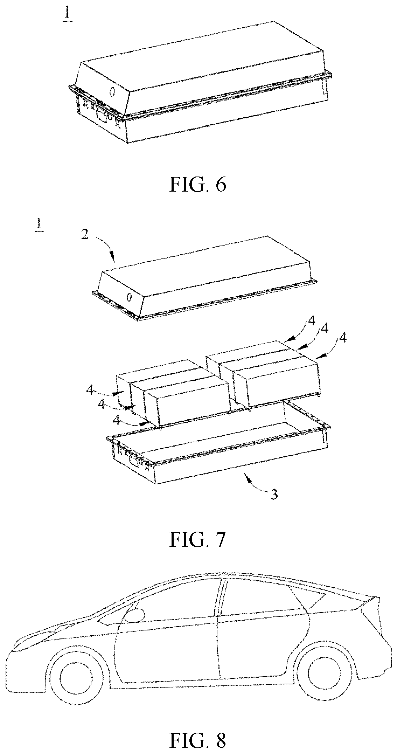

FIG. 6 and FIG. 7 show a battery pack 1 as an example. Refer to FIG. 6 and FIG. 7. The battery pack 1 may include a battery box and a plurality of battery modules 4 arranged in the battery box. The battery box includes an upper box body 2 and a lower box body 3. The upper box body 2 is configured to be engaged with the lower box body 3 to form an enclosed space for accommodating the battery modules 4. The plurality of battery modules 4 may be arranged in the battery box in any manner.

### Electric apparatus

In an embodiment of this application, the electric apparatus of this application includes at least one of the secondary battery, the battery module, or the battery pack of this application. The secondary battery, the battery module, or the battery pack may be used as a power source for the electric apparatus, or an energy storage unit of the electric apparatus. The electric apparatus includes but is not limited to a mobile digital apparatus (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, an energy storage system, and the like.

FIG. 8 shows an apparatus as an example. The apparatus is a battery electric vehicle, a hybrid electric vehicle, or a plug-in hybrid electric vehicle, or the like. To satisfy requirements of the apparatus for high power and high energy density, a battery pack or a battery module may be used.

In another example, the apparatus may be a mobile phone, a tablet computer, a notebook computer, or the like. Such apparatus is generally required to be light and thin and may use a secondary battery as its power source.

How the secondary battery prepared according to the embodiments of this application influences performance of electrochemical apparatuses is characterized hereinafter based on specific examples. However, it should be noted in particular that the scope of protection of this application is defined by the claims without being limited to the above embodiments.

Examples

Unless otherwise stated, raw materials used in the present invention are analytically pure, and water used in this application is deionized water.

### Example 1

### Preparation of high-nickel ternary positive electrode plate

A high-nickel ternary material (LiNi_{0.6}Co_{0.2}Mn_{0.2}O₂), a conductive carbon black, and a binder polyvinylidene fluoride (PVDF) were mixed at a weight ratio of 95.0:2.3:2.7 in N-methylpyrrolidone and stirred to uniformity to obtain a positive electrode slurry. Then the obtained positive electrode slurry was evenly applied on a positive electrode current collector (aluminum foil), followed by drying, cold pressing, and cutting (that is, cutting an electrode plate to a required size), to obtain a positive electrode plate.

### Surface treatment of electrode plate

A certain volume of phytic acid solution (obtained by dissolving 25 mg of phytic acid powder in 100 mL of dimethyl sulfoxide) was added dropwise onto a surface of the prepared positive electrode plate. The positive electrode plate was left standing for 25 minutes, and then dried. A ratio of an amount of the phytic acid solution used to an area of the electrode plate was 0.25 mL/cm².

### Example 2

Except that the ratio of the amount of the phytic acid solution used to the area of the electrode plate was 0.35 mL/cm², the high-nickel ternary positive electrode plate was prepared and the surface of the electrode plate was treated as described in Example 1.

### Example 3

Except that the ratio of the amount of the phytic acid solution used to the area of the electrode plate was 0.45 mL/cm², the high-nickel ternary positive electrode plate was prepared and the surface of the electrode plate was treated as described in Example 1.

### Example 4

Except that the standing time was 35 minutes, the high-nickel ternary positive electrode plate was prepared and the surface of the electrode plate was treated as described in Example 1.

### Example 5

Except that the standing time was 45 minutes, the high-nickel ternary positive electrode plate was prepared and the surface of the electrode plate was treated as described in Example 1.

### Comparative Example 1

The high-nickel ternary positive electrode plate was prepared as described in Example 1, but without being subjected to phytic acid treatment.

### Comparative Example 2

Except that the ratio of the amount of the phytic acid solution used to the area of the electrode plate was 0.05 mL/cm², the high-nickel ternary positive electrode plate was prepared and the surface of the electrode plate was treated as described in Example 1.

### Comparative Example 3

Except that the ratio of the amount of the phytic acid solution used to the area of the electrode plate was 0.15 mL/cm², the high-nickel ternary positive electrode plate was prepared and the surface of the electrode plate was treated as described in Example 1.

### Comparative Example 4

Except that the standing time was 5 minutes, the high-nickel ternary positive electrode plate was prepared and the surface of the electrode plate was treated as described in Example 1.

### Comparative Example 5

Except that the standing time was 15 minutes, the high-nickel ternary positive electrode plate was prepared and the surface of the electrode plate was treated as described in Example 1.

### Preparation of lithium-ion battery

The high-nickel ternary positive electrodes prepared and obtained after treatment in the foregoing Examples 1-5 and Comparative Examples 1-5, artificial graphite negative electrodes, and separators were assembled into battery cells, which were injected with an electrolyte (a liquid electrolyte) to obtain lithium-ion battery products.

### Test of related parameters of high-nickel ternary positive electrode plate

### 1. Test of surface morphology of electrode plate

The positive electrode plates in all examples and comparative examples were tested using a ZEISS sigma 300 scanning electron microscope (SEM) (Carl Zeiss, Germany) according to the standard JY/T010-1996. The test involved surfaces of the electrode plates, and element phosphorus plane scanning analysis of the surfaces. The results are shown in (A) and (B) in FIG. 1.

As shown in (A) and (B) in FIG. 1, a three-dimensional network cross-linked layer is formed on a surface of the high-nickel ternary positive electrode plate in Example 1 after phytic acid treatment, and element scanning results in (B) also prove the effective doping of element phosphorus in the surface cross-linked layer.

### 2. Test of thickness of lithium phosphate layer

A high-resolution test was performed on the positive electrode plates in all examples and comparative examples using a Tecnai F30 field emission transmission electron microscope (TEM) (Philips/FEI, Netherlands) to determine structures and thicknesses of high-nickel ternary substrates and lithium phosphate coating layers. The results are shown in (C) and (D) of FIG. 1 and Table 1 below.

As shown in (C) and (D) in FIG. 1, a cross-linked layer with a thickness of approximately 12.6 nm can be seen on the surface of the electrode plate in Example 1 after treatment, and in addition, high-resolution spectrum analysis results show that a interplanar spacing of the surface corresponds to (460) crystal plane of lithium phosphate, proving that phytic acid treatment results in formation of a lithium phosphate three-dimensional cross-linked layer with a thickness of approximately 12.6 nm on the surface of the high-nickel ternary electrode plate.

### 3. Calculation of percentage of lithium phosphate

The positive electrode plates of all examples and comparative examples were tested using a Thermo Scientific ESCALAB 250Xi X-ray photoelectron spectrometer (XPS) (Thermo Fisher Scientific, USA), and percentages of lithium phosphate in all examples and comparative examples were evaluated through comparison of P 2p spectra. The results are shown in FIG. 2 and Table 1 below.

As shown in FIG. 2, a peak in a P 2p XPS spectrum in Example 1 mainly corresponds to lithium phosphate, and through the comparison of a change in the peak area, percentages of lithium phosphate layers in different examples and comparative examples can be obtained.

**Table 1**

| No. | Positive electrode plate | Ratio of amount of phytic acid used in treatment to area of positive electrode material plate | Phytic acid treatment time | Thickness of lithium phosphate layer (nm) | Percentage of lithium phosphate indicated by XPS spectrum |
|---|---|---|---|---|---|
| Example 1 | LiNi_{0.6}CO_{0.2}Mn_{0.2}O₂ | 0.25 mL/cm² | 25 min | 12.6 | 24.5% |
| Example 2 | LiNi_{0.6}Co_{0.2}Mn_{0.2}O₂ | 0.35 mL/cm² | 25 min | 12.6 | 24.3% |
| Example 3 | LiNi_{0.6}Co_{0.2}Mn_{0.2}O₂ | 0.45 mL/cm² | 25 min | 12.6 | 21.9% |
| Example 4 | LiNi_{0.6}Co_{0.2}Mn_{0.2}O₂ | 0.25 mL/cm² | 35 min | 12.0 | 24.5% |
| Example 5 | LiNi_{0.6}Co_{0.2}Mn_{0.2}O₂ | 0.25 mL/cm² | 45 min | 12.1 | 24.5% |
| Comparative Example 1 | LiNi_{0.6}Co_{0.2}Mn_{0.2}O₂ | 0 | 0 | 0 | 0 |
| Comparative Example 2 | LiNi_{0.6}Co_{0.2}Mn_{0.2}O₂ | 0.05 mL/cm² | 25 min | 12.6 | 8.6% |
| Comparative Example 3 | LiNi_{0.6}Co_{0.2}Mn_{0.2}O₂ | 0.15 mL/cm² | 25 min | 12.6 | 15.8% |
| Comparative Example 4 | LiNi_{0.6}Co_{0.2}Mn_{0.2}O₂ | 0.25 mL/cm² | 5 min | 3.8 | 24.5% |
| Comparative Example 5 | LiNi_{0.6}Co_{0.2}Mn_{0.2}O₂ | 0.25 mL/cm² | 15 min | 7.9 | 24.5% |

It can be seen from Table 1 that in this application, when the ratio of the amount of the phytic acid used in treatment to the area of the positive electrode material plate is 0.25 mL/cm² to 0.45 mL/cm², and the surface treatment time of the positive electrode material plate is 25 minutes to 45 minutes, a required lithium phosphate layer thickness (12.0 nm to 12.6 nm) and lithium phosphate percentage (21.9% to 24.5%) can be obtained, where when the ratio of the amount of phytic acid used in treatment to the area of the positive electrode material plate is 0.25 mL/cm², and the surface treatment time of the positive electrode material plate is 25 minutes, an optimal lithium phosphate layer thickness (12.6 nm) and lithium phosphate percentage (24.5%) can be obtained.

### Battery performance test

### 1. Test and calculation of battery first-cycle coulombic efficiency

At 25°C, the obtained battery was charged to 4.2 V at a constant current of 1/3C, and then charged to a current of 0.05C at a constant voltage of 4.2 V The obtained charge capacity was recorded as a first-cycle charge capacity C1. The battery was left standing for 5 minutes, and then discharged to 2.8 V at 1/3C. The obtained discharge capacity was recorded as a first-cycle discharge capacity D1. The first-cycle coulombic efficiency E1 was equal to D1/C1 * 100%.

### 2. Battery capacity retention rate test

At 25°C, the battery corresponding to Example 1 was charged to 4.2 V at a constant current of 1/3C, then charged to a current of 0.05C at a constant voltage of 4.2 V, left standing for 5 minutes, and then discharged to 2.8 V at 1/3C. The obtained capacity was recorded as an initial capacity C0. The foregoing steps were repeated for the same battery, and a discharge capacity Cn of the battery after the n-th cycle was recorded. A battery capacity retention rate Pn after each cycle was equal to Cn/C0 * 100%.

In this test, the first cycle corresponds to n = 1, the second cycle corresponds to n = 2, ..., and the 200th cycle corresponds to n = 200.

Table 2 shows the battery first-cycle coulombic efficiency data and the battery capacity retention rate data (data measured after 200 cycles under the foregoing test conditions, that is, the value of P200) of all examples and comparative examples.

**Table 2**

| No. | Positive electrode plate | Ratio of amount of phytic acid used in treatment to area of positive electrode material plate | Phytic acid treatment time | First-cycle coulombic efficiency | Capacity retention rate after 200 cycles |
|---|---|---|---|---|---|
| Example 1 | LiNi_{0.6}CO_{0.2}Mn_{0.2}O₂ | 0.25 mL/cm² | 25 min | 88.4% | 86.9% |
| Example 2 | LiNi_{0.6}Co_{0.2}Mn_{0.2}O₂ | 0.35 mL/cm² | 25 min | 88.0% | 86.2% |
| Example 3 | LiNi_{0.6}Co_{0.2}Mn_{0.2}O₂ | 0.45 mL/cm² | 25 min | 87.5% | 86.0% |
| Example 4 | LiNi_{0.6}Co_{0.2}Mn_{0.2}O₂ | 0.25 mL/cm² | 35 min | 87.9% | 86.0% |
| Example 5 | LiNi_{0.6}Co_{0.2}Mn_{0.2}O₂ | 0.25 mL/cm² | 45 min | 87.6% | 85.8% |
| Comparative Example 1 | LiNi_{0.6}Co_{0.2}Mn_{0.2}O₂ | 0 | 0 | 79.8% | 74.4% |
| Comparative Example 2 | LiNi_{0.6}Co_{0.2}Mn_{0.2}O₂ | 0.05 mL/cm² | 25 min | 82.1% | 80.3% |
| Comparative Example 3 | LiNi_{0.6}Co_{0.2}Mn_{0.2}O₂ | 0.15 mL/cm² | 25 min | 85.3% | 83.1% |
| Comparative Example 4 | LiNi_{0.6}Co_{0.2}Mn_{0.2}O₂ | 0.25 mL/cm² | 5 min | 80.9% | 79.9% |
| Comparative Example 5 | LiNi_{0.6}Co_{0.2}Mn_{0.2}O₂ | 0.25 mL/cm² | 15 min | 83.5% | 82.8% |

It can be seen from Table 2 that in this application, when the ratio of the amount of the phytic acid used in treatment to the area of the positive electrode material plate is 0.25 mL/cm² to 0.45 mL/cm², and the surface treatment time of the positive electrode material plate is 25 minutes to 45 minutes, a required first-cycle coulombic efficiency (87.5% to 88.4%) and capacity retention rate after 200 cycles (85.8% to 86.9%) can be obtained, where when the ratio of the amount of the phytic acid used in treatment to the area of the positive electrode material plate is 0.25 mL/cm², and the surface treatment time of the positive electrode material plate is 25 minutes, an optimal first-cycle coulombic efficiency (88.4%) and capacity retention rate after 200 cycles (86.9%) can be obtained.

It should be noted that this application is not limited to the foregoing embodiments. The foregoing embodiments are merely examples, and embodiments having substantially the same constructions and the same effects as the technical idea within the scope of the technical solutions of this application are all included in the technical scope of this application. In addition, without departing from the essence of this application, various modifications made to the embodiments that can be conceived by persons skilled in the art, and other manners constructed by combining some of the constituent elements in the embodiments are also included in the scope of this application.

## Claims

1. A positive electrode material plate, **characterized in that** the positive electrode material plate comprises:
an electrode plate substrate and a coating layer arranged on a surface of the electrode plate substrate,
wherein the coating layer is a three-dimensional network lithium phosphate layer with a thickness of 10 nm to 20 nm, and a percentage of lithium phosphate is 20% to 30%.

2. The positive electrode material plate according to claim 1, **characterized in that** the coating layer is a three-dimensional network lithium phosphate layer with a thickness of 12 nm to 13 nm.

3. The positive electrode material plate according to claim 1, **characterized in that** the coating layer is a three-dimensional network lithium phosphate layer with a thickness of 12.4 nm to 12.8 nm.

4. The positive electrode material plate according to any one of claims 1 to 3, **characterized in that** the percentage of lithium phosphate is 22% to 26%.

5. The positive electrode material plate according to any one of claims 1 to 4, **characterized in that** the electrode plate substrate comprises a compound of formula I:
LiNiₓCo_{y}M_{1-x-y}O₂ formula I,
wherein 0.6 ≤ x < 1, 0 ≤ y ≤ 0.2, and M is at least one of Mn, Al, Ti, Zr, Mg, W, and Mo.

6. A method for preparing a positive electrode material plate, wherein the method comprises:
providing a mixture of a nickel source, a cobalt source, and a metal M source, wherein M is at least one of Mn, Al, Ti, Zr, Mg, W, and Mo, and mixing the mixture with urea and deionized water, followed by stirring and performing a hydrothermal reaction to obtain a precursor;
reacting the precursor with a lithium source, and performing sintering to obtain a positive electrode material, wherein the positive electrode material has formula I:
LiNiₓCo_{y}M_{1-x-y}O₂ formula I,
wherein 0.6 ≤ x < 1, 0 ≤ y ≤ 0.2, and M is at least one of Mn, Al, Ti, Zr, Mg, W, and Mo; and
applying the positive electrode material on a positive electrode current collector, and performing a treatment to obtain a positive electrode material plate.

7. The method according to claim 6, **characterized in that** the treatment comprises the following step:
adding a phytic acid solution dropwise onto a surface of the positive electrode material plate to form a coating layer on the surface of the positive electrode material plate, wherein the coating layer is a three-dimensional network lithium phosphate layer with a thickness of 12 nm to 13 nm, and a percentage of lithium phosphate is 20% to 30%;
wherein a ratio of an amount of the phytic acid solution used to an area of the positive electrode material plate is 0.2 mL/cm² to 0.45 mL/cm².

8. The method according to claim 7, **characterized in that** the ratio of the amount of the phytic acid solution used to the area of the positive electrode material plate is 0.2 mL/cm² to 0.3 mL/cm².

9. The method according to claim 8, **characterized in that** the ratio of the amount of the phytic acid solution used to the area of the positive electrode material plate is 0.25 mL/cm².

10. The method according to any one of claims 7 to 9, **characterized in that** a surface treatment time of the surface of the positive electrode material plate is 20 minutes to 45 minutes.

11. The method according to claim 10, **characterized in that** the surface treatment time of the positive electrode material plate is 20 minutes to 30 minutes.

12. The method according to claim 11, **characterized in that** the surface treatment time of the positive electrode material plate is 25 minutes.

13. A secondary battery, **characterized by** comprising the positive electrode material plate according to any one of claims 1 to 5.

14. A battery module, **characterized by** comprising the secondary battery according to claim 13.

15. A battery pack, **characterized by** comprising the secondary battery according to claim 13 or the battery module according to claim 14.

16. An electric apparatus, **characterized by** comprising the secondary battery according to claim 13, the battery module according to claim 14, or the battery pack according to claim 15, wherein the secondary battery, the battery module, or the battery pack is used as a power source of the electric apparatus or an energy storage unit of the electric apparatus.
